# DEMANDE DE BREVET EUROPEEN

(11) **EP 4 450 767 A1**
(43) Date de publication de la demande: **23.10.2024**
(21) Numéro de dépôt: 24171233.0
(22) Date de dépôt: 19.04.2024
(51) Int. Cl.: F01D 5/30, B23K 20/12, F01D 5/34, B23K 37/00, B23P 15/00

(54) **PROCÉDÉ DE DIMENSIONNEMENT DE MOIGNONS OPTIMISÉS POUR LE SOUDAGE ORBITAL D AUBES SUR UN ROTOR DE TURBOMACHINE**

(30) Priorité: 21.04.2023 BE 202305297
(71) Demandeur: Safran Aero Boosters, 4041 Herstal (BE)
(72) Inventeur: LEFAUX, Yann Jean-Pierre, 4041 Herstal (BE); VERHELST, Damien, 4041 Herstal (BE)
(74) Mandataire: Lecomte & Partners

(57) **Abrégé**

L'invention propose un procédé de dimensionnement d'une section (S) de jonction (10) par soudure par friction orbitale avec un excentrique e, entre une aube (4) et un moignon (6) d'un disque aubagé pour turbomachine, dans lequel la section dimensionnée (S) présente un contour arrondi (12, 13) à une ou deux extrémités de ladite section suivant une corde (C) des aubes, correspondant chacune à un bord d'attaque (4.2) ou un bord de fuite (4.3) desdites aubes, ledit ou lesdits contours arrondis présentant sur un secteur (N, M) d'au moins 120° un rayon moyen d'au moins deux fois l'excentrique e.

## Description

### Domaine technique

L'invention a trait à un procédé de fabrication d'un disque aubagé pour turbomachine, et plus particulièrement à un procédé de fabrication d'un disque aubagé par soudage par friction orbitale d'aubes à un disque rotorique de turbomachine. L'invention a également trait à un procédé de formation de moignons ainsi qu'à une aube et un disque rotorique comprenant un moignon formé par ledit procédé.

### Art antérieur

Le changement climatique est une préoccupation majeure pour de nombreux organes législatifs et de régulation à travers le monde. En effet, diverses restrictions sur les émissions de carbone ont été, sont ou seront adoptées par divers états. En particulier, une norme ambitieuse s'applique à la fois aux nouveaux types d'avions mais aussi à ceux en circulation nécessitant de devoir mettre en oeuvre des solutions technologiques afin de les rendre conformes aux réglementations en vigueur. L'aviation civile se mobilise depuis maintenant plusieurs années pour apporter une contribution à la lutte contre le changement climatique.

Les efforts de recherche technologique ont déjà permis d'améliorer de manière très significative les performances environnementales des avions. La Déposante prend en considération les facteurs impactant dans toutes les phases de conception et de développement pour obtenir des composants et des produits aéronautiques moins énergivores, plus respectueux de l'environnement et dont l'intégration et l'utilisation dans l'aviation civile ont des conséquences environnementales modérées dans un but d'amélioration de l'efficacité énergétique des avions.

Par voie de conséquence, la Déposante travaille en permanence à la réduction de son incidence climatique négative par l'emploi de méthodes et l'exploitation de procédés de développement et de fabrication vertueux et minimisant les émissions de gaz à effet de serre au minimum possible pour réduire de l'empreinte environnementale de son activité.

Ces travaux de recherche et de développement soutenus portent à la fois sur les nouvelles générations de moteurs d'avions, l'allègement des appareils, notamment par les matériaux employés et les équipements embarqués allégés, le développement de l'emploi des technologies électriques pour assurer la propulsion, et, indispensables compléments aux progrès technologiques, les biocarburants aéronautiques.

A cet effet, l'invention est le résultat des recherches technologiques visant à améliorer de manière très significative les performances des avions et, en ce sens, contribue à la réduction de l'impact environnemental des avions.

Dans ce contexte, l'invention vise un procédé de soudage par friction orbitale pour la réalisation d'un disque aubagé (communément désigné par : « blisk ») ou un tambour aubagé (communément désigné par « blum ») de compresseur de turbomachine.

Le soudage par friction orbitale est un procédé de soudage dans lequel les pièces à assembler sont mises en contact sous effort et soudées par une mise en mouvement circulaire généralement définit par un excentrique, et accompagné d'une vitesse tangentielle uniforme, de manière à générer un frottement et un échauffement homogène au niveau d'une jonction de soudure entre les deux pièces.

Il est par ailleurs connu d'avoir recours au soudage par friction linéaire, il s'agit d'un procédé de soudage dans lequel la chaleur nécessaire est créée par un mouvement de va-et-vient des interfaces à souder. Cependant, le soudage par friction orbital présente plusieurs avantages par rapport à la friction linéaire, par exemple, le mouvement relatif entre les deux interfaces est continu grâce au mouvement de friction circulaire, ce qui apporte une meilleure homogénéité thermique. Contrairement au mouvement linéaire pour lequel la vitesse relative des deux pièces devient nulle à chaque demi-période d'oscillation. De plus, le temps de cycle d'un soudage orbital est considérablement inférieur à celui du soudage par friction linéaire (respectivement environ 2 minutes comparé à environ 5 minutes).

Le document de brevet publié EP 2 535 516 A1 divulgue un procédé de soudage par friction orbitale d'aubes à un rotor de turbomachine dans lequel, une fois une consommation matière est atteinte dans une zone de soudage entre l'aube et le disque, le mouvement orbital est stoppé à une position de référence, et un effort de forgeage est exercé sur l'aube contre le rotor afin de finaliser la soudure.

Après la soudure, un usinage évolutif s'adaptant à la surface externe de l'aube est ensuite réalisé afin d'enlever la matière de l'interface qui aura été repoussée vers l'extérieur lors de la soudure (communément désignée par : « flash »), de manière à éviter tout ressaut lié à l'usinage.

Toutefois, le soudage peut révéler une jonction de soudure de l'aube avec le disque rotorique qui risque de présenter des défauts structurels et/ou des défauts de santé matière.

Le document de brevet publié EP 1 495 829 A1 divulgue un procédé de fabrication d'aubes et disques combinés profilés, dans lequel chacune des aubes présente un moignon à souder au disque par friction linéaire.

Le document propose une conception du moignon comprenant respectivement aux extrémités de la zone de bord avant et de bord arrière, un surplus de matière se terminant par un bord droit s'étendant parallèlement à une direction d'oscillation du soudage par friction linéaire.

Cependant, la conception du moignon proposé par le document présente une marge d'amélioration, car elle ne peut pas être appliquée au soudage orbital. En effet, un tel moignon ne permet pas d'obtenir une jonction soudée par un soudage orbital qui soit saine et exempte de contaminants.

### Résumé de l'invention

### Problème technique

L'invention a pour objectif de résoudre au moins un des problèmes posés par l'art antérieur. Plus précisément, l'invention a pour objectif de proposer une section de jonction d'une aube et d'un moignon de disque permettant de maîtriser et d'optimiser le soudage orbital afin d'obtenir une jonction soudée saine et exempte de contaminants.

### Solution technique

La présente invention a pour objet un procédé de dimensionnement d'une section de jonction par soudure par friction orbitale avec un excentrique *e*, entre une aube et un moignon d'un disque aubagé pour turbomachine, dans lequel la section dimensionnée présente un contour arrondi à une ou deux extrémités de ladite section suivant une corde des aubes, correspondant chacune à un bord d'attaque ou un bord de fuite desdites aubes, ledit ou lesdits contours arrondis présentant sur un secteur d'au moins 120° un rayon moyen d'au moins deux fois l'excentrique e.

Selon un mode avantageux de l'invention, le ou chacun des contours arrondis est à distance du bord d'attaque ou du bord de fuite correspondant, de manière à former une surépaisseur amont ou aval, respectivement, par rapport à une section finale des aubes, ladite ou chacune desdites surépaisseurs amont ou aval étant destinée à être enlevée après jonction par soudure.

Selon un mode avantageux de l'invention, la ou chacune de la surépaisseur amont ou aval présente une valeur suivant la corde des aubes supérieure à 1 mm et/ou inférieure à 15 mm.

Selon un mode avantageux de l'invention, la section dimensionnée forme une surépaisseur intrados et/ou extrados par rapport à une section finale des aubes, ladite ou chacune desdites surépaisseurs intrados ou extrados étant destinée à être enlevée après jonction par soudure.

Selon un mode avantageux de l'invention, la ou chacune de la surépaisseur intrados ou extrados présente une valeur suivant une perpendiculaire à la corde des aubes supérieure à 0,5 mm et/ou inférieure à 5 mm.

L'invention concerne également un procédé de fabrication d'un disque aubagé de turbomachine comprenant les étapes suivantes : mise à disposition d'un disque avec des moignons ; jonction d'aubes aux moignons par soudure par friction orbitale, remarquable en ce que les moignons du disque sont dimensionnés suivant le procédé de dimensionnement selon l'invention.

Selon un mode avantageux de l'invention, ledit procédé de fabrication comprenant l'étape supplémentaire : usinage des moignons et des aubes jointes aux moignons de manière à retirer l'élargissement et arriver à la section finale des aubes.

L'invention concerne également un disque rotorique destiné à la fabrication d'un disque aubagé pour une turbomachine, le disque rotorique comprenant une surface externe pourvue d'une rangée annulaire de moignons s'étendant radialement depuis ladite surface externe, chacun des moignons comprenant une section destinée à être soudée par friction orbitale avec une aube, remarquable en ce que lesdits moignons sont dimensionnés par le procédé de dimensionnement selon l'invention.

Selon un mode avantageux de l'invention, la section est comprise entre 200 mm² et 7000 mm².

Selon un mode avantageux de l'invention, la section est comprise entre 2000 mm² et 3000 mm².

L'invention concerne également une aube destinée à la fabrication d'un disque aubagé pour une turbomachine, l'aube comprenant une face destinée à être soudée par friction orbitale avec un disque rotorique, remarquable en ce que ladite face présente une section dimensionnée par le procédé de dimensionnement selon l'invention.

Selon un mode avantageux de l'invention, la section est comprise entre 200 mm² et 7000 mm².

Selon un mode avantageux de l'invention, la section est comprise entre 2000 mm² et 3000 mm².

Les mesures de l'invention sont avantageuses en ce que le dimensionnement de la section de jonction en optimisant les contours arrondis aux extrémités, notamment à la suite de la détermination du rayon moyen correspondant, permet un élargissement optimal desdites extrémités par rapport à la section finale, de manière à garantir suffisamment de surface en contact lors du soudage afin d'assurer une meilleure homogénéité du malaxage de la matière, résultant en une soudure résistante et plus robuste.

De plus, le moignon dimensionné par le procédé de l'invention comprend une raideur améliorée.

Il est entendu que chaque détail d'un mode de réalisation ci-dessous peut être combiné à chaque autre détail des autres modes de réalisation.

### Brève description des dessins

La figure 1 illustre un disque rotorique comprenant un moignon s'étendant radialement depuis une surface externe dudit disque, et une aube comprenant une face présentant une section de jonction destinée à être soudée par friction orbitale au moignon du disque ;
La figure 2 illustre de manière schématique le dimensionnement de la section de jonction de l'aube et/ou du moignon ;
La figure 3 illustre une vue agrandie d'un contour arrondi amont à une extrémité de la section de jonction de la figure 2 ;
La figure 4 illustre une vue agrandie d'un contour arrondi aval à une extrémité de la section de jonction de la figure 2 ;
La figure 5 représente de manière schématique une vue en perspective, lors du soudage par friction orbitale, de l'aube au moignon du disque, au moyen de la section de jonction ;
La figure 6A représente des mouvements relatifs de deux sections de l'art antérieur lors d'un soudage par friction linéaire suivant une direction d'oscillation perpendiculaire à la corde du profil ;
La figure 6B représente des mouvements relatifs de deux sections de l'art antérieur avec un surplus de matière formant un angle droit parallèle à la direction d'oscillation lors d'un soudage par friction linéaire ;
La figure 6C représente des mouvements relatifs de deux sections de l'art antérieur lors d'un soudage par friction linéaire suivant une direction d'oscillation parallèle à la corde du profil ;
La figure 7 représente des mouvements relatifs de deux sections selon l'invention lors du soudage par friction orbitale.
La figure 8 représente un pourcentage de temps de contact entre des sections correspondantes lors du soudage orbital, pour trois modélisations de sections différentes.

### Description détaillée des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine, les longueurs étant mesurées axialement. Les largeurs sont mesurées selon la circonférence. La direction radiale est perpendiculaire à l'axe de rotation. L'amont et l'aval sont en référence au sens d'écoulement principal du flux dans la turbomachine.

Les dimensions des figures ne sont pas à l'échelle et en particulier les épaisseurs ou les dimensions radiales sont exagérées pour faciliter la lecture des figures.

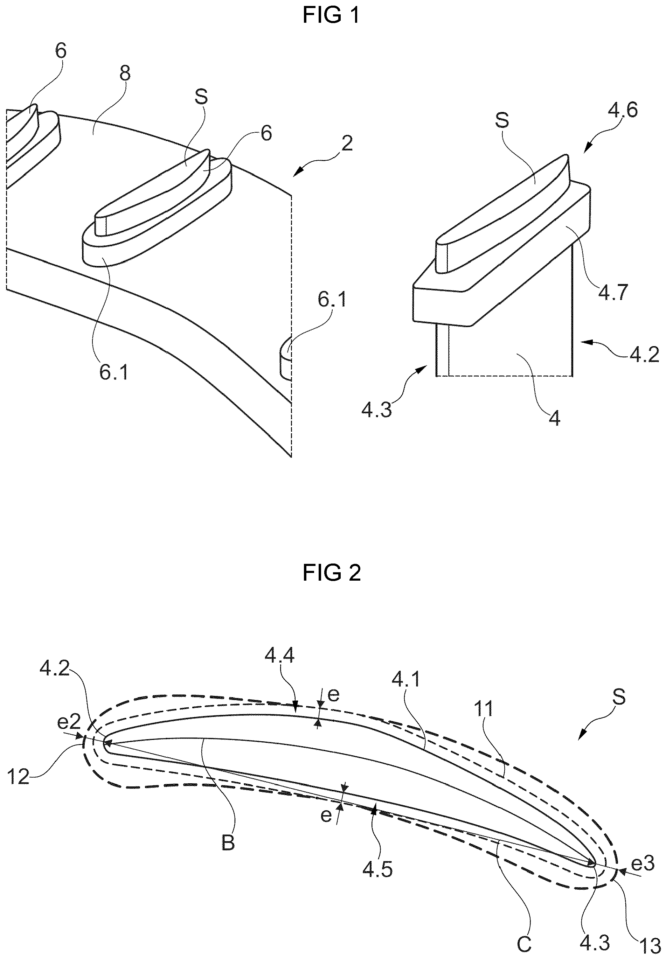

La figure 1 illustre un disque rotorique 2 comprenant un moignon 6 s'étendant radialement depuis une surface externe 8 dudit disque 2, et une aube 4 comprenant une face S présentant une section de jonction S destinée à être soudée par friction orbitale au moignon 6 du disque 2, et précisément soudée à une section de jonction S identique dudit moignon 6. Les deux sections de jonction S sont planes. Le soudage par friction orbitale sera expliqué plus loin dans la présente description.

Le disque rotorique 2 comprend une rangée annulaire de moignons 6 destinés à être soudés avec des aubes 4 correspondants, de manière à former un disque aubagé de turbomachine. Chaque aube 4 comprend une extrémité inférieure 4.6 ayant une forme sensiblement similaire au moignon 6 du disque 2. Il est considéré que l'aube 4 comprend un moignon à son extrémité inférieure 4.6.

Préférentiellement, le disque aubagé est une roue mobile destinée à être disposée en amont d'un bec de séparation de flux d'air dans la turbomachine. A cet effet, la surface externe 8 correspond à une surface de guidage d'air d'une veine de fluide le long et au travers d'un rotor. Alternativement, le disque aubagé peut correspondre à un rotor de type tambour appartenant à un compresseur haute-pression ou basse-pression.

De préférence, le disque aubagé est un disque dit : « bi-matériaux » comprenant deux alliages de titane différents. Par exemple, les aubes 4 peuvent être fabriquées à partir d'un alliage Ta6v, et le disque rotorique 2 à partir d'un des alliages suivants : Ti17, Ti575, Ti1023.

De manière avantageuse, le mélange des deux alliages de titane différents (Ta6v et Ti17) présente une usinabilité plus aisée, et permet d'atteindre un gain en masse par rapport à une solution basée, par exemple, uniquement sur un alliage en Ti17, cela est notamment dû à une densité du Ta6v qui est légèrement plus faible que celle du Ti17.

En effet, l'alliage Ti17 a été préférentiellement choisi pour la partie disque pour ces bonnes caractéristiques en fatigue HCF (acronyme anglais de : « High Cycle Fatigue ») et LFC (« Low Cycle Fatigue »). Un disque en Ti17 affichera également une plus grande marge en vitesse d'éclatement qu'un disque en Ta6v. Pour les aubes, l'alliage Ta6v a été choisi car permet de procurer aux aubes une élongation à rupture plus élevée (meilleure tenue aux impacts), et un meilleur comportement en propagation de fissures qui se traduit par une meilleure durabilité aux impacts basse énergie.

Dans la configuration illustrée à la figure 1, l'aube 4 est illustrée suivant une direction radiale opposée à celle lors du soudage afin de mieux visualiser la section de jonction S au pied de ladite aube 4.

Préférentiellement, le moignon 6 présente également la section de jonction S qui est identique à celle de l'aube 4. Avantageusement, la section S est dimensionnée suivant un procédé de dimensionnement des moignons qui sera expliqué suivant les figures 2 à 4.

La figure 2 illustre de manière schématique le dimensionnement de la section de jonction S de l'aube et/ou du moignon.

Le dimensionnement de la section de jonction S est réalisé suivant le procédé de dimensionnement des moignons qui comprend préférentiellement une première étape de modélisation d'une première section 11 à partir d'un profil aérodynamique 4.1 de l'aube, ledit profil 4.1 correspond au profil final de l'aube après usinage.

De préférence, la première section 11 comprend un élargissement du profil 4.1 au moyen d'une surépaisseur e correspondant, de préférence, à un excentrique e du mouvement d'oscillation orbital lors du soudage par friction orbitale. L'excentrique e correspond à la valeur de décalage de l'outil (de maintien de l'aube) et le disque par rapport à un centre de référence, permettant de créer le mouvement d'oscillation orbital. En d'autres termes, l'excentrique correspond à la distance entre l'axe de rotation de l'outil et le point central autour duquel il effectue son mouvement orbital.

L'élargissement avec la surépaisseur e est préférentiellement constant et suit la forme du profil 4.1. Toutefois, la surépaisseur e peut présenter des variations autour dudit profil 4.1.

Le procédé comprend ensuite la modélisation de la section de jonction S à partir d'un élargissement de la première section 11 de manière à former un contour arrondi amont 12 et un contour arrondi aval 13, correspondants respectivement, aux extrémités 12 et 13 de la section S au niveau de chacun des bord d'attaque 4.2 et bord de fuite 4.3 du profil 4.1 de l'aube.

Dans cette configuration, chacun des arrondi amont 12 et arrondi aval 13 est distant, respectivement, du bord d'attaque 4.2 d'une surépaisseur amont e2, et distant du bord aval 4.3 d'une surépaisseur aval e3, suivant la corde C du profil 4.1 de l'aube.

Préférentiellement, les surépaisseurs amont e2 et aval e3 se conforment à la surépaisseur e au niveau d'un extrados 4.4 et d'un intrados 4.5 du profil 4.1 de l'aube. Les surépaisseurs amont e2 et aval e3 sont, de préférence, plus grandes que la surépaisseur e.

A cet effet, la section de jonction S correspond à la section aérodynamique élargie de l'aube, avec un élargissement plus important au niveau des bords d'attaque 4.2 et de fuite 4.3.

Il est à noter que préalablement au soudage par friction orbitale, un volume de matière sacrificiel (s'étendant essentiellement radialement) est prévu sur chacun des aubes et des moignons à assembler. Ce volume sacrificiel est amené à être extrudé en dehors de l'interface de contact entre les deux sections de jonction S, formant ainsi une bavure, dite : « flash », qui sera ensuite éliminée, de préférence, par usinage, afin d'arriver à la section finale (correspondant au profil aérodynamique 4.1 de l'aube) pour former le disque aubagé.

Toutefois, dans le cas où des moignons de l'état de l'art comprenant des sections non-dimensionnées suivant le procédé de l'invention, le flash risque d'entraîner une recirculation de matière à l'intérieur des régions desdites sections les plus étroites, typiquement au bord d'attaque et au bord de fuite, et risque de créer des évidements et/ou de ne pas évacuer des contaminants créés dans les premiers instants de la soudure.

De manière avantageuse, le dimensionnement de la section de jonction S à la suite d'un élargissement par rapport à la section finale 4.1, permet d'agrandir la surface de contact lors du soudage par friction orbitale de manière à éviter assurer une homogénéité thermique pendant la soudure, précisément dans la section finale 4.1 de l'aube 4. En effet, si on ajoute une surépaisseur e à minima égale à la valeur de l'excentrique, cela signifie que les points de la surface aérodynamique finale 4.1 sont toujours en contact pendant la soudure (entre les deux moignons). Contrairement aux points dans cette surépaisseur e qui, par le mouvement orbital, ne sont en contact avec la surface opposée que pendant une partie de l'orbite.

Ainsi, pendant la soudure, une vitesse de consommation de matière demeure constante au droit de la section 11, ce qui permet d'éviter la recirculation de la matière (potentiellement nocive car elle empêche l'évacuation des impuretés) au niveau de la section du profil final aérodynamique 4.1 de l'aube et ainsi permettre une homogénéité et une continuité du malaxage de la matière du moignon avec celle de l'aube permettant de préserver davantage le profil aérodynamique de l'aube et d'obtenir une jonction résistante.

Chacun des contours arrondis 12 et 13 présente un rayon moyen permettant la modélisation de la section S. En effet, les rayons moyens des arrondis sont avantageusement prédéterminés de manière à obtenir des surépaisseurs aux extrémités de la section S qui permettent d'assurer un soudage optimal de l'aube au moignon.

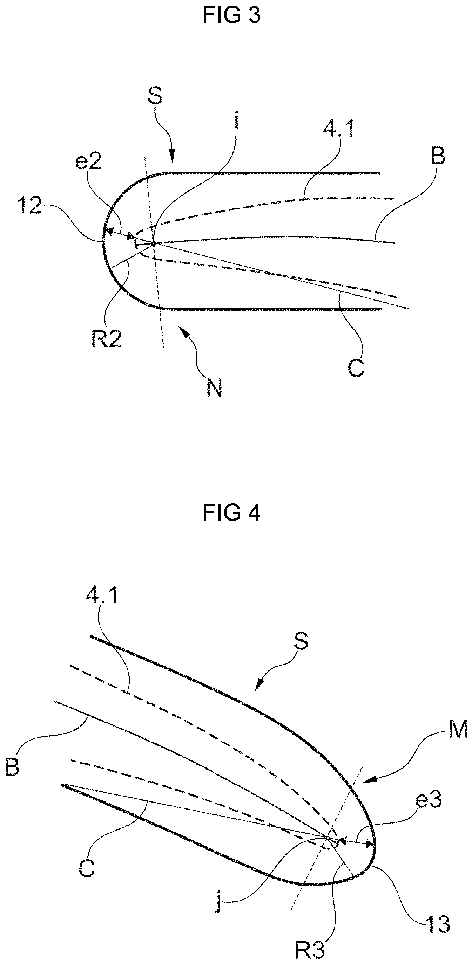

La figure 3 illustre une vue agrandie du contour arrondi amont 12 de la section de jonction S dimensionnée.

On peut voir que le contour arrondi amont 12 présente un rayon moyen R2 dans un secteur N d'au moins 120° depuis un centre i dudit contour 12. Le secteur N s'étend de préférence sur 180°, à cet effet, ledit secteur N est perpendiculaire à une ligne de cambrure B du profil 4.1 de l'aube.

Le secteur N peut s'étendre jusqu'à 220°, la ligne de cambrure B traverse une partie sensiblement centrale dudit secteur N.

Le centre i du contour arrondi amont 12 peut être coïncident au centre d'un arrondi au droit du bord d'attaque 4.2, ou décalé dudit centre.

Le rayon moyen R2 correspond à une moyenne de rayons s'étendant sur le secteur N et peuvent varier d'au plus ±10% par rapport à la valeur du rayon moyen R2.

Avantageusement, la valeur du rayon moyen R2 correspond à au moins deux fois la valeur de l'excentrique e, ou à au moins quatre fois la valeur dudit excentrique e, et à au plus six fois la valeur dudit excentrique e.

Préférentiellement, la valeur de l'excentrique e est supérieure à 0,25 mm et/ou inférieure à 4 mm, et plus préférentiellement comprise entre 0,5 mm et 2,5 mm.

La surépaisseur amont e2 présente une valeur suivant la corde C qui dépend du rayon moyen R2 déterminé dans le secteur N. A cet effet, la valeur de la surépaisseur amont e2 est supérieure à 0,5 mm et/ou inférieure à 25 mm, et plus préférentiellement comprise entre 1 mm et 15 mm.

En dehors du secteur N, la surépaisseur amont e2 diminue de manière à se conformer avec la surépaisseur e au droit de l'extrados 4.4 et de l'intrados 4.5 visibles à la figure 2.

La figure 4 illustre une vue agrandie du contour arrondi aval 13 de la section de jonction S dimensionnée.

En référence aux figures 3 et 4, le contour arrondi aval 13 présente un rayon moyen R3 dans un secteur M d'au moins 120° depuis un centre j dudit contour 13. Le secteur M s'étend préférentiellement sur 180°, et est perpendiculaire à la ligne de cambrure 8 et s'étend similairement au secteur N présentant le rayon moyen R2.

Le centre j du contour arrondi amont 13 peut être coïncident au centre d'un arrondi au droit du bord de fuite 4.3, ou décalé dudit centre.

Le rayon moyen R3 correspond à une moyenne de rayons s'étendant sur le secteur M et peuvent varier d'au plus ±10% par rapport à la valeur du rayon moyen R3.

Avantageusement, la valeur du rayon moyen R3 correspond à au moins deux fois la valeur de l'excentrique e, ou à au moins quatre fois la valeur dudit excentrique e, et à au plus six fois la valeur dudit excentrique e.

A cet effet, la valeur de la surépaisseur aval e3 suivant la corde C est supérieure à 0,5 mm et/ou inférieure à 25 mm, et plus préférentiellement comprise entre 1 mm et 15 mm.

En dehors du secteur M, la surépaisseur aval e3 diminue de manière à se conformer avec la surépaisseur e au droit de l'extrados 4.4 et de l'intrados 4.5 visibles à la figure 2.

La valeur du rayon moyen R3 du contour arrondi aval 13 peut environ correspondre à la valeur du rayon moyen R2 du contour arrondi amont 12 (le terme environ signifie ici ±20% de la valeur nominale).

La modélisation de la section de jonction S peut être effectuée manuellement au moyen d'un logiciel de modélisation, ou de manière automatisée par un algorithme informatique spécifique.

De manière avantageuse, l'élargissement des extrémités 12 et 13 au moyen des surépaisseurs amont e2 et aval e3 permet de dimensionner de façon optimale la section de jonction S. En effet, les rayons moyens R2 et R3 qui sont supérieurs à au moins deux fois l'excentrique utilisé lors du soudage orbital et pour élargir l'intrados et l'extrados de la section de l'aube, permettent d'assurer suffisamment de matière au niveau des extrémités 12, 13 pour garantir une quantité de matière malaxée qui soit proche de celle malaxée au niveau d'une portion centrale de la section de jonction S, ce qui permet d'atteindre une température d'échauffement de matière qui soit sensiblement similaire entre les extrémités et la portion centrale de la section S.

De plus, la présence des rayons moyens R2, R3 sur des secteurs N, M d'au moins 120° permet de conserver suffisamment la forme arrondie des extrémités 12, 13 (contrairement à une forme plus pointue des bords 4.2 et 4.3 sans les surépaisseurs e2, e3). Cela aide à homogénéiser la vitesse de consommation de matière lors du soudage sur toute la section S, car les contours arrondis 12, 13 suivent, de manière sensiblement coaxiale, le mouvement d'oscillation orbital.

En référence à la figure 2, le procédé de dimensionnement des moignons de l'invention, peut comprendre, en outre, une détermination d'un rapport entre une longueur moyenne maximale *zₘₐₓ* à partir de rayons projetés *z_{i,α}* s'étendant totalement dans la première section 11 depuis un point i à sa périphérie, et une longueur moyenne minimale *zₘᵢₙ* à partir de rayons *z_{i,α}* s'étendant totalement dans ladite première section 11 depuis un autre point *i* à sa périphérie.

En effet, la détermination des longueurs moyennes maximale *zₘₐₓ* et minimale *zₘᵢₙ* nécessite la détermination de la longueur moyenne *zᵢ* pour chacun des points *i* sur la totalité de la périphérie de la première section 11. Une telle détermination est, de préférence, une démarche automatisée au moyen d'un algorithme informatique. A cet égard, un algorithme appliquant une méthode de type : « lancer de rayon » peut être adapté, ce dernier étant également connu sous le nom anglais « ray tracing ».

La méthode de lancer de rayons peut être réalisée suivant les étapes suivantes :
- modéliser une première section 11 basée sur le profil aérodynamique 4.1 final de l'aube avec l'ajout de la surépaisseur e (qui partage la même valeur que celle de l'excentrique qui est prévu d'être appliqué à l'outil lors du soudage orbital) ; et
- fractionner la périphérie de la section 11 en plusieurs points *i* à partir desquels les rayons *z_{i,α}* seront projetés, préférentiellement à environ 2000 points répartis de façon homogène (ce nombre pouvant varier selon la précision de calcul désirée) ; et
- projeter des rayons *z_{i,α}* qui balayent toute la section 11 depuis un premier point *i* de la périphérie 11.1, le nombre de rayons *z_{i,α}* projetés dépend préférentiellement d'un angle α compris entre 0.001° et 10° ; et
- mesurer la longueur moyenne *zᵢ* de tous les rayons *z_{i,α}* projetés à partir du premier point *i* ; et
- répéter l'étape de projection des rayons *z_{i,α}* ainsi que celle de la mesure de la longueur moyenne *zᵢ*, successivement pour tous points *i* de la périphérie ; et
- évaluer toutes les longueurs moyennes *zᵢ* mesurées à partir de tous les points *i* pour déterminer la longueur moyenne maximale *zₘₐₓ* et la longueur moyenne minimale *zₘᵢₙ.*

Dans la configuration illustrée à la figure 2, la longueur moyenne minimale *zₘᵢₙ* est mesurée à partir d'un point *i* se trouvant au niveau d'une des deux extrémités 12 et 13, et la longueur moyenne maximale *zₘₐₓ* est mesurée à partir d'un autre point i se trouvant au niveau d'une partie centrale de la première section 11.

Avantageusement, les surépaisseurs e2 et e3, sont rajoutées à la première section 11 modélisée de manière à optimiser la forme aux extrémités 12, 13 pour permettre à la section de jonction S de respecter le rapport : *zₘₐₓ*/ *zₘᵢₙ* ≤ 2.

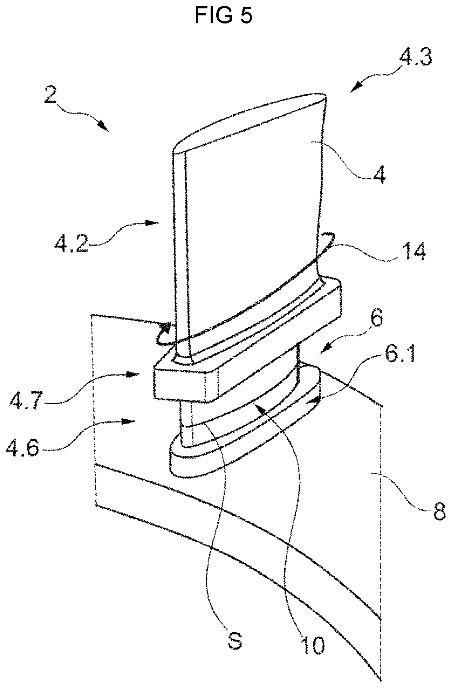

La figure 5 représente de manière schématique une vue en perspective, lors du soudage par friction orbitale, de l'aube 4 au moignon 6 du disque 2, au moyen de la section de jonction S.

Préférentiellement, l'aube 4 comprend au droit de son extrémité inférieure 4.6 un renfort 4.7 qui sera usiné postérieurement à l'opération de soudage par un mouvement d'oscillation orbital 14, conjointement avec un volume 6.1 de renfort du moignon 6 sur le disque 2.

De manière avantageuse, le dimensionnement de la section de jonction S avec l'optimisation des contours arrondis aux extrémités, notamment à la suite d'une détermination d'un rayon moyen correspondant, permet un élargissement optimal par rapport à la section finale, ce qui augmente efficacement la surface de contact lors du soudage par friction orbitale auxdites extrémités de manière à éviter la recirculation de la matière au niveau de la section du profil aérodynamique de l'aube 4 et ainsi permettre une homogénéité du malaxage de la matière du moignon 6 avec celle de l'aube 4, pour obtenir une soudure finale présentant une meilleure qualité structurelle et dépourvue d'évidements et de contaminants.

De plus, pendant le soudage, au droit de la section de jonction S, une vitesse de consommation de matière demeure constante, ce qui permet d'obtenir une jonction 10 résistante et une meilleure qualité de la soudure.

Préférentiellement, la section de jonction S de chacun des aube 4 et moignon 6, comprend une surface totale supérieure ou égale à 200 mm² et inférieure ou égale à 7000 mm², et plus préférentiellement comprise entre 2000 mm² et 3000 mm².

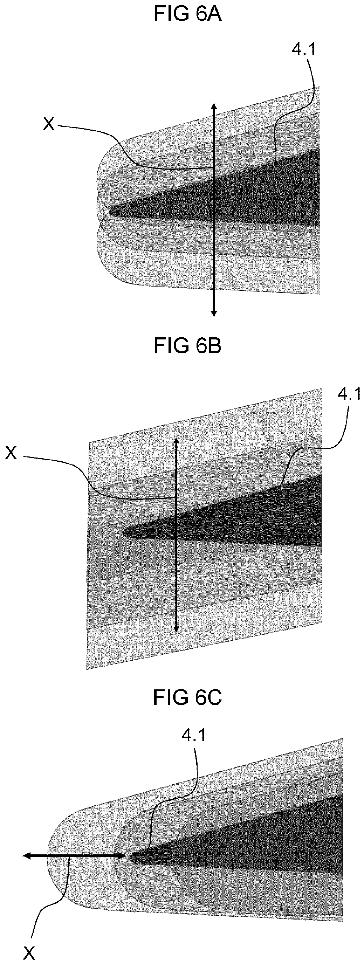

Les figures 6A, 6B et 6C représente les mouvements relatifs des sections à souder correspondants à l'état de l'art antérieur (soudure linéaire) dans une direction X perpendiculaire à la corde du profil de l'aubage ou dans le sens cordal (parallèle à la corde).

La section de l'art antérieur correspond ici à une section telle que proposée par le document de brevet publié EP 1 495 829 A1, i.e. dans lequel chaque extrémité de la zone de bord avant et arrière comprend un excédent de matière qui se termine par un bord droit aligné parallèlement à une direction d'oscillation X du soudage par friction linéaire.

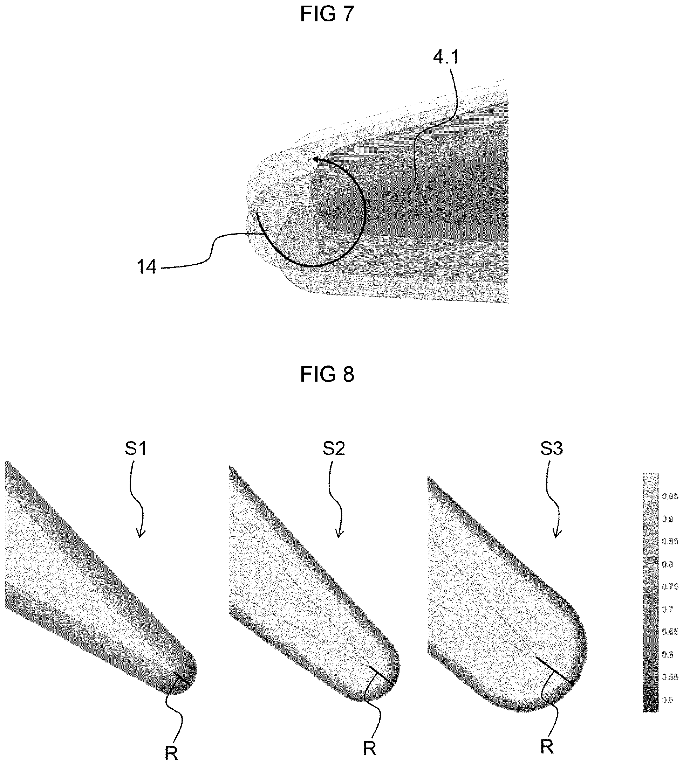

La figure 7 représente des mouvements relatifs de deux sections selon l'invention lors du soudage par friction orbitale. Cette figure schématise la différence fondamentale avec l'art antérieur (friction linéaire) et permet de mieux comprendre les mouvements relatifs des deux sections à souder dans le cadre d'une soudure orbitale.

La figure 8 représente un pourcentage de temps de contact entre des sections correspondantes lors du soudage orbital, pour trois modélisations de sections différentes S1, S2 et S3.

La première section S1 comporte à au moins une de ses extrémités un rayon moyen R inférieur à deux fois l'excentrique e (R=1,1.e) ce qui n'est pas conforme à l'invention. Les deux autres section S2 et S3 sont en revanche modélisées suivant la présente invention et affichent un ratio rayon moyen sur excentrique supérieur à 2.

La figure 8 représente également la proportion de temps pendant lequel deux sections à souder correspondantes entrent en contact lors du processus de soudage orbital, et cela au cours d'une période du mouvement orbital pour une même valeur de l'excentrique.

**Table 1**

| | S1 | S2 | S3 |
|---|---|---|---|
| R/e | 1.1 | 3.3 | 6 |
| Temps de contact | 35% | 45% | 47% |
| Etat de la soudure | NOK | OK | OK |

En référence à la figure 8 et à la table 1, on peut constater que pour une même valeur de l'excentrique, le temps moyen en contact augmente avec la valeur du ratio R/e (rayon moyen sur l'excentrique). Un temps de contact plus élevé amènera une meilleure homogénéité thermique et donc la diminution des gradients thermiques présents aux extrémités du profil du moignon.

On peut également constater que les surfaces de deux sections qui restent le plus en contact lors du soudage orbital, sont principalement concentrée autour du profil aérodynamique de l'aube finale (représenté en pointillé), permettant ainsi de s'assurer que le malaxage de matière couvre à 100% la section finale de l'aube, l'excédent de matière étant destiné à être usiné.

Un état de soudure qualifié de « OK » indique une soudure saine, exempte de défaut structurel ou de contaminants. Une soudure « NOK » correspond à une soudure présentant des manques de matière (fissuration dans le joint soudé) ou de rupture du flash. L'inhomogénéité thermique peut également perturber l'éjection des contaminants générés aux tous premiers instants de la soudure. Une soudure « NOK » peut donc également correspondre à une soudure présentant des contaminants qui n'ont pas été éjectés hors du profil final de la pale.

On peut voir à partir de la table 1 que les sections S2, S3 présentant un rayon moyen R supérieur ou égal à 2.e permettent d'obtenir une jonction soudée dont l'état de santé est « OK », tandis que la section S1 comprenant un rayon moyen R inférieur à 2.e, conduit à un état de la jonction soudée qualifié non conforme « NOK ».

Cette notion de ratio R/e n'est pas présente dans l'art antérieur car non applicable à une soudure linéaire. Cela peut notamment être expliqué par le fait que le surplus de matière ainsi que le bord droit proposé par le document EP 1 495 829 A1, ont été modélisés suivant une direction de friction linéaire X. Or, le soudage orbital ne se limite pas à une seule direction de friction linéaire, mais englobe plutôt toutes les directions, car le malaxage de matière se fait à 360° en soudage orbital. Par conséquent, le bord droit crée des zones de fortes contraintes (arêtes latérales) lors de la friction orbitale. Ces arêtes vives vont générer une rupture du flash dans deux directions, ce qui va perturber l'éjection des contaminants.

En général, il est important de noter qu'une configuration où deux sections à souder ont une forme de cercle parfait permet d'obtenir un soudage orbital optimal. Cette configuration assure un malaxage parfaitement homogène et constant, ce qui garantit une montée en température stable des matériaux. De plus, la forme circulaire des sections permet une uniformité de la friction sur 360°, sans changement de forme. Partant de ce principe, les inventeurs ont eu la démarche inventive d'augmenter le rayon des contours arrondis aux extrémités de la section de jonction, et cela, tout en optimisant le surplus de matière ajouté au profil aérodynamique de l'aube. Ainsi, ils ont réalisé que lorsque le rayon moyen est égal à au moins 2.e et sur un secteur angulaire d'au moins 120°, alors le risque d'apparition de zones de contraintes au niveau de la forme de la section pouvant causer une recirculation de matière dans la soudure ou une fissuration à l'interface des deux matériaux à souder est considérablement réduit.

Avantageusement, un rayon moyen compris entre 2.e et 6.e permet d'obtenir une forme générale de la section de jonction qui garantit un état de soudure « OK ». Au-delà de 6.e, le gain devient peu considérable au niveau de la santé matière de la jonction soudée, et ajoute du temps d'usinage du moignon après la soudure.

Les soudures ont été réalisées sur une même machine et avec des paramètres de soudage constants, i.e. excentricité, fréquence d'oscillation, vitesse et pression de forgeage qui demeurent inchangés, seule la forme des sections est modifiée.

On observe l'absence de contaminants lorsque les sections sont dimensionnées selon le procédé de l'invention avec un rayon moyen aux extrémités qui est égal à au moins deux fois l'excentrique e et à au plus six fois l'excentrique e. Tandis que la présence de contaminants est constatée lorsque le rayon moyen est inférieur à 2.e.

## Revendications

1. Procédé de dimensionnement d'une section (S) de jonction (10) par soudure par friction orbitale avec un excentrique *e*, entre une aube (4) et un moignon (6) d'un disque aubagé pour turbomachine, dans lequel la section dimensionnée (S) présente un contour arrondi (12, 13) à une ou deux extrémités (12, 13) de ladite section (S) suivant une corde (C) des aubes (4), correspondant chacune à un bord d'attaque (4.2) ou un bord de fuite (4.3) desdites aubes (4), ledit ou lesdits contours arrondis (12, 13) présentant sur un secteur (N, M) d'au moins 120° un rayon moyen (R2, R3) d'au moins deux fois l'excentrique e et d'au plus six fois l'excentrique e.

2. Procédé de dimensionnement selon la revendication 1, dans lequel le ou chacun des contours arrondis (12, 13) est à distance du bord d'attaque (4.2) ou du bord de fuite (4.3) correspondant, de manière à former une surépaisseur amont (e2) ou aval (e3), respectivement, par rapport à une section finale (4.1) des aubes (4), ladite ou chacune desdites surépaisseurs amont (e2) ou aval (e3) étant destinée à être enlevée après jonction par soudure.

3. Procédé de dimensionnement selon la revendication 2, dans lequel la ou chacune de la surépaisseur amont (e2) ou aval (e3) présente une valeur suivant la corde (C) des aubes (4) supérieure à 1 mm et/ou inférieure à 15 mm.

4. Procédé de dimensionnement selon l'une des revendications 1 à 3, dans lequel la section dimensionnée (S) forme une surépaisseur intrados (e) et/ou extrados (e) par rapport à une section finale (4.1) des aubes (4), ladite ou chacune desdites surépaisseurs intrados (e) ou extrados (e) étant destinée à être enlevée après jonction par soudure.

5. Procédé de dimensionnement selon la revendication 4, dans lequel la ou chacune de la surépaisseur intrados (e) ou extrados (e) présente une valeur suivant une perpendiculaire à la corde (C) des aubes supérieure à 0,5 mm et/ou inférieure à 5 mm.

6. Procédé de fabrication d'un disque aubagé de turbomachine comprenant les étapes suivantes :
- mise à disposition d'un disque (2) avec des moignons (6) ;
- jonction d'aubes (4) aux moignons (6) par soudure par friction orbitale ; **caractérisé en ce que** les moignons (6) du disque (2) sont dimensionnés suivant l'une des revendications 1 à 5.

7. Procédé de fabrication selon la revendication 6, comprenant l'étape supplémentaire :
- usinage des moignons (6) et des aubes (4) jointes aux moignons (6) de manière à retirer l'élargissement et arriver à la section finale (4.1) des aubes (4).

8. Disque rotorique (2) destiné à la fabrication d'un disque aubagé pour une turbomachine, le disque rotorique comprenant une surface externe (8) pourvue d'une rangée annulaire de moignons (6) s'étendant radialement depuis ladite surface externe (8), chacun des moignons (6) comprenant une section (S) destinée à être soudée par friction orbitale avec une aube (4), **caractérisé en ce que** lesdits moignons (6) sont dimensionnés par le procédé de dimensionnement selon l'une des revendications 1 à 5.

9. Disque rotorique (2) selon la revendication 8, **caractérisé en ce que** la section (S) est comprise entre 200 mm² et 7000 mm².

10. Disque rotorique (2) selon l'une des revendications 8 ou 9, **caractérisé en ce que** la section (S) est comprise entre 2000 mm² et 3000 mm².

11. Aube (4) destinée à la fabrication d'un disque aubagé pour une turbomachine, l'aube comprenant une face (S) destinée à être soudée par friction orbitale avec un disque rotorique (2), **caractérisé en ce que** ladite face (S) présente une section (S) dimensionnée par le procédé de dimensionnement selon l'une des revendications 1 à 5.

12. Aube (4) selon la revendication 11, **caractérisée en ce que** la section (S) est comprise entre 200 mm² et 7000 mm².

13. Aube (4) selon l'une des revendications 11 ou 12, **caractérisée en ce que** la section (S) est comprise entre 2000 mm² et 3000 mm².
